(19) Europäisches Patentamt
European Patent Office
Office européen des brevets

(11) Numéro de publication: **0 447 313 B1**

(12) **FASCICULE DE BREVET EUROPEEN**

(45) Date de publication de fascicule du brevet: **18.01.95**

(51) Int. Cl.[6]: **C09K 19/38**, C08F 20/30

(21) Numéro de dépôt: **91400672.1**

(22) Date de dépôt: **12.03.91**

# (54) Polymères cristaux liquides ferroélectriques.

(30) Priorité: **16.03.90 FR 9003381**

(43) Date de publication de la demande:
**18.09.91 Bulletin 91/38**

(45) Mention de la délivrance du brevet:
**18.01.95 Bulletin 95/03**

(84) Etats contractants désignés:
**DE FR GB SE**

(56) Documents cités:
**EP-A- 0 228 703**
**WO-A-90/00586**

**MOLECULAR CRYSTALS & LIOUID CRYSTALS, vol. 157,1988, pages 151-162; N. KOIDE et al.: "Synthesis and thermal properties of sidechain type liquid crystalline polymers with chiral unit in the flexible moiety"**

**PATENT ABSTRACTS OF JAPAN, vol. 13, no. 562 (C-665)[3910], 13 décembre 1989; & JP-A-12 34 414**

**PATENT ABSTRACTS OF JAPAN, vol. 13, no. 562 (C-665)[3910], 13 décembre 1989; & JP-A-12 34 413**

(73) Titulaire: **THOMSON-CSF**
**173, Boulevard Haussmann**
**F-75008 Paris (FR)**

(72) Inventeur: **Tabrizian, Maryam**
**THOMSON-CSF**
**SCPI**
**Cédex 67**
**F-92045 Paris la Défense (FR)**
Inventeur: **Bunel, Claude**
**THOMSON-CSF**
**SCPI**
**Cédex 67**
**F-92045 Paris la Défense (FR)**
Inventeur: **Le Barny, Pierre**
**THOMSON-CSF**
**SCPI**
**Cédex 67**
**F-92045 Paris la Défense (FR)**
Inventeur: **Noel, Claudine**
**THOMSON-CSF**
**SCPI**
**Cédex 67**
**F-92045 Paris la Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

Inventeur: **Vairon, Jean-Pierre**
**THOMSON-CSF**
**SCPI**
**Cédex 67**
**F-92045 Paris la Défense (FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

## Description

La présente invention concerne des polymères cristaux liquides à chaînes latérales, présentant des propriétés ferroélectriques. Elle concerne également l'utilisation de ces polymères ferroélectriques pour l'obtention de matériaux ferroélectriques ayant des applications dans le domaine de la visualisation.

Actuellement, sept mésophases possédant des propriétés ferroélectriques sont connues. Il s'agit de phases smectiques formées à partir de molécules chirales dans lesquelles le grand axe des molécules est incliné d'un angle $\theta$ non nul par rapport à la normale aux plans des couches smectiques. Les cristaux liquides ferroélectriques peuvent être divisés en deux grandes classes :

. les smectiques 2D, auxquelles appartiennent les phases $S_C$*, $S_F$* et $S_I$*

. les smectiques ordonnés, parfois appelés cristaux smectiques qui regroupent les phases $S_G$*, $S_H$*, $S_J$* et $S_K$*.

Toutes ces phases après orientation par un champ électrique continu deviennent ferroélectriques et bistables.

Ces propriétés ont été mises à profit dans le domaine de la visualisation par N. A. CLARK et S. LAGERWALL (Appl. Phys. Lett. Vol. 36, n° 89, 1980) qui ont montré que des temps de réponse très courts, de l'ordre de la dizaine de microsecondes pouvaient être obtenus avec des petites molécules de cristaux liquides $S_C$* à condition que celles-ci soient introduites dans une cellule dont l'épaisseur est inférieure au pas de la phase. Depuis 1980, un effort de recherche important a été entrepris dans le monde, d'une part pour obtenir des matériaux $S_C$* bien adaptés aux besoins de l'affichage, d'autre part pour maîtriser les problèmes technologiques que posent ce type d'afficheur (multiplexage, obtention des teintes de gris, réalisation de cellules de faible épaisseur sur une grande surface, traitement de surface des électrodes pour obtenir à la fois un ancrage planaire et la bistabilité...). S'il existe actuellement des mélanges $S_C$* présentant des propriétés satisfaisantes, les problèmes technologiques sont encore mal résolus ce qui limite le développement de ce type d'afficheur. C'est la raison pour laquelle les cristaux liquides nématiques, bien qu'ayant des temps de réponse élevés (de l'ordre de la dizaine de millisecondes), sont les seuls matériaux mésomorphes utilisés dans les systèmes d'affichage commercialisés.

Les polymères cristaux liquides à chaînes latérales qui ne sont connus que depuis une quinzaine d'années combinent les propriétés d'anisotropie des grandeurs physiques caractéristiques des petites molécules de cristaux liquides à celles des propriétés propres aux polymères amorphes (facilité de mise en oeuvre, existence d'une température de transition vitreuse, module d'Young...). Ces nouveaux matériaux qui peuvent présenter les mêmes types de phase que les petites molécules de cristaux liquides ont des applications potentielles dans des domaines aussi variés que : l'enregistrement optique (digital, analogique, holographie), l'optique linéaire (filtres, polariseurs...), l'optique non linéaire, la visualisation, la pyroélectricité. L'ouvrage " Side Chain Liquid Crystal" édité par Mc Ardle en 1989 (Blackie Glasgow and London) fait un point récent des connaissances acquises dans le domaine.

Parmi les polymères cristaux liquides à chaînes latérales, ceux qui présentent une phase $S_C$* ont reçu une attention toute particulière depuis leurs premières synthèses en 1984 (V. SHIBAEV, M. KOZLOVSKY, L. BERESNEV, L. BLINOV and A. PLATE, Polymer Bull. n° 12, p. 299, 1984).

Cet intérêt s'est accru lorsque SCHEROWSKY et ses collaborateurs ont montré la faisabilité d'obtenir des monodomaines orientés avec des polymères $S_C$* et la possibilité de les commuter d'un état stable à l'autre par action d'un champ électrique continu, avec des temps de réponse de l'ordre de 10 ms (Proceedings of the twelfth International Liquid Crystal Conference).

De tels matériaux peuvent trouver leur application dans le domaine des écrans de grandes dimensions ayant une cadence de renouvellement d'image lente.

Enfin, la Société "IDEMITSU KOSAN COMPANY LIMITED" a montré qu'il était possible d'obtenir des matériaux ferroélectriques à base de polymères cristaux liquides à chaînes latérales possédant une phase $S_C$* sur une large gamme de température comprenant la température ambiante et ayant un temps de réponse de l'ordre de la milliseconde en mélangeant un polymère ferroélectrique avec une petite molécule présentant la phase $S_C$ ou $S_C$*, ce qui ouvre la voie aux applications écrans plats de grande dimension compatibles avec la cadence vidéo (Cf. EP 297 554).

La présente invention propose une nouvelle famille de polymères cristaux liquides à chaînes latérales, ferroélectriques, dérivés du biphényle, ayant une application dans le domaine de la visualisation.

L'intérêt de ces nouveaux polymères par rapport à l'art antérieur réside dans le fait que certains d'entre eux présentent une phase smectique chirale 2D plus ordonnée que la phase $S_C$*, conduisant ainsi à une valeur de la polarisation spontanée obtenue après polarisation, supérieure à celle présentée par la phase $S_C$*.

Ces polymères pourront être utilisés seuls ou mieux en mélange avec de petites molécules présentant une phase $S_F$ ou $S_F^*$.

L'addition de petites molécules $S_F$ ou $S_F^*$ aux polymères selon l'invention aura pour intérêt de :

- diminuer la viscosité du matériau ferroélectrique final, donc d'obtenir des temps de réponse de l'ordre de la milliseconde,
- d'élargir la gamme en température de la phase $S_F^*$,
- d'amener la phase $S_F^*$ dans un domaine de température comprenant la température ambiante.

Grâce à leur mouillabilité, les matériaux ferroélectriques ainsi obtenus pourront trouver une application dans le domaine de la visualisation où des besoins en écrans de grandes dimensions ou en écrans courbes se font sentir.

L'invention a donc pour objet un polymère cristal liquide ferroélectrique à chaînes latérales le polymère comprenant un squelette du type polyacrylate, polyméthacrylate ou polychloroacrylate sur lequel sont branchées les chaînes latérales caractérisé en ce qu'il répond à la formule générale suivante :

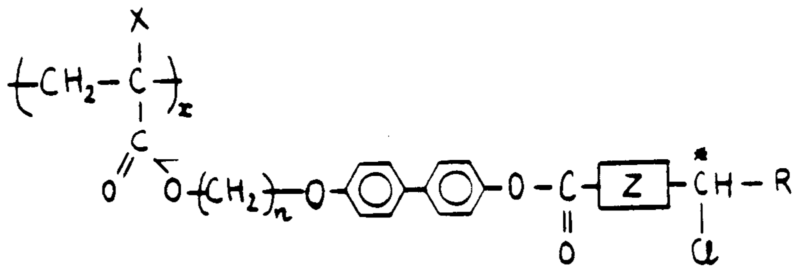

X étant H, $CH_3$ ou Cl
$2 \leqq n \leqq 14$
Z étant rien :
et R étant,

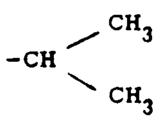 , ou 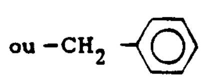

ou Z étant :

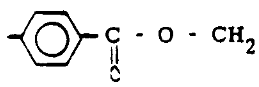

et R étant $-CH_3$,

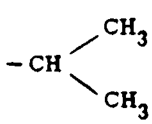 ,

$-(CH_2)_3-CH_3$
ou

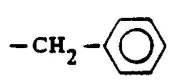

L'invention sera mieux comprise et d'autres avantages apparaîtront grâce à la description qui va suivre, donnée à titre non limitatif, accompagnée des dessins annexés parmi lesquels :

- la figure 1 est un schéma général de synthèse de monomères selon l'invention,
- la figure 2 est un schéma réactionnel d'estérification,
- la figure 3 est un schéma général de synthèse d'autres monomères selon l'invention,
- la figure 4 est un schéma de synthèse du chloro-2 propanol,
- les figures 5, 6 et 7 sont des thermogrammes de monomères selon l'invention,
- les figures 8, 9 et 10 sont des thermogrammes de polymères selon l'invention.

Des exemples de synthèse de polymères selon l'invention vont maintenant être détaillés.

Exemple 1: Synthèse du poly [(acryloyloxyalkyloxy)-4 (2 chloropropanoyloxy)-4′ biphényle] ou composé $P1_n$.

Le schéma général de la synthèse des monomères correspondants est présenté à la figure 1.

. Synthèse de l'acryloyloxy alkyloxy-4 hydroxy-4′ biphényle ou composé $A_n$ :

La synthèse est réalisée en trois étapes:

i) Synthèse de l'acrylate de lithium.

L'acrylate de lithium est préparé à partir du monohydrate d'hydroxyde de lithium (fourni par la Société JANSSEN) en excès par rapport de l'acide acrylique dans le méthanol. Le rendement de la réaction est 86 % .

ii) Synthèse de l′(ω-bromoalkyloxy)-4 hydroxy-4′ biphényle ou composé $B_n$.

Cette synthèse a été faite selon la méthode de KLARMANN. On opère en présence de potasse en défaut et du dérivé dibromé en excès par rapport aux fonctions phénol.

Les rendements R de la réaction et les températures de fusion $T_f$ selon les différentes valeurs de n sont reportés dans le tableau 1 placé en fin de description.

Les modes opératoires sont identiques quelle que soit la valeur de n. Seules quelques variations dans les procédés de purification sont à noter.

En effet, contrairement au dibromohexane, le dibromooctane et le dibromodécane sont des solides à température ambiante (pour $Br(CH_2)_8Br$, $T_f$ = 24°C et pour $Br(CH_2)_{10}Br$, $T_f$ = 27°C) de faible solubilité et difficile à éliminer. Il faut distiller l'excès des dérivés dibromés sous pression réduite et laver à l'éthanol.

iii) Synthèse de l'acryloyloxy alkyloxy-4 hydroxy-4′ biphényle (composé $A_n$)

Ce produit est synthétisé par réaction d'un excès d'acrylate de lithium dans l'hexaméthylphosphortriamide (HMPA). Lors de la synthèse il faut que la température n'excède pas 45-50°C pour éviter une polymérisation de l'acrylate. Le tableau 2, placé en fin de description, indique les températures de fusion et les rendements obtenus selon les valeurs de n.

. Synthèse des monomères : l'acryloyloxy alkyloxy-4 (chloro-2) propanoyloxy 4′ biphényle ou composé $M1_n$ :

La synthèse de ces monomères peut être effectuée par les deux voies indiquées dans la figure 1.

C'est la méthode utilisant le dicyclohexyl 1-3 carbodiimide qui conduit aux monomères avec un meilleur rendement et une plus grande pureté.

Estérification en présence de dicyclohexyl 1-3 carbodiimide :

Pour cette synthèse, on a choisi l'acétone comme solvant en raison de l'insolubilité de la dicyclohexylurée formée au cours de la réaction. Dans cette condition, en mettant à profit la différence de solubilité dans l'acétone puis dans l'éthanol, entre les produits initiaux et finaux, on a réussi par recristalisation fractionnée, à obtenir un produit pur avec un rendement satisfaisant. Ce produit se présente alors sous la forme d'une poudre blanche et brillante.

Les rendements, les points de fusion et les pouvoirs rotatoires de différents monomères sont rassemblés dans le tableau 3 placé en fin de description.

La différence de température de fusion entre les premières et deuxièmes montées en température correspond, comme on le verra ultérieurement à un changement de structure cristalline.

La polymérisation des monomères peut se faire par voie radicalaire, sous vide, en utilisant comme solvant le N-N-diméthylformamide distillé et comme amorceur l'-α-α'-azobisisobutyronitrile (AIBN), pendant 24 heures et à 60 ° C.

Exemple 2: Synthèse du poly [(acryloyloxyoctyloxy)-4 (chloro-2 methyl-3 butanoyloxyl)-4' biphényle] ou composé $P2_8$.

Le monomère correspondant $M2_8$ est obtenu par estérification de l'acryloyloxyoctyloxy-4 hydroxy-4' biphényle ou composé $A_8$ (qui s'obtient selon la procédure décrite dans l'exemple 1) par l'acide chloro-2 méthyl-3 butanoïque selon le schéma réactionnel représenté à la figure 2.

Cette synthèse a été effectuée avec un rendement de 60 % . Une première montée en température révèle un point de fusion à 59,5 ° C pour le matériau obtenu. Une deuxième montée en température donne un point de fusion pour 57 ° C.

La polymérisation peut être obtenue comme précédemment.

Exemple 3: Synthèse du poly [(acryloyloxyoctyloxy)-4 (chloro-2 pentanoyloxy)-4' biphényle] ou composé $P3_8$.

Le monomère correspondant $M3_8$ est obtenu de la même manière que celui de l'exemple 2.

Le rendement de cette synthèse est de 62 % . Les points de fusion sont au premier passage de 79,7 ° C et au deuxième passage de 69 ° C.

La polymérisation peut être obtenue comme pour l'exemple 1.

Exemple 4 : Synthèse du poly [(acryloyloxyoctyloxy)-4 (chloro-2 phényl-3 propanoyloxy)-4' biphényle] ou composé $P4_8$.

Le monomère correspondant $M4_8$ est obtenu de la même manière que celui de l'exemple 2.

Le rendement de cette synthèse est de 52 % . Les points de fusion sont au premier passage de 72 ° C et au deuxième passage de 63 ° C.

La polymérisation peut être obtenue comme pour l'exemple 1.

Exemple 5: Synthèse du poly [(acryloyloxyalkyloxy)-4 (chloro-2 propyloxycarbonyl-4 benzoyloxy-4' biphényle] ou composé $P5_n$.

La synthèse des monomères correspondants $M5_n$ s'effectue selon le schéma réactionnel représenté à la figure 3.

Ces monomères sont synthétisés en deux étapes par condensation des trois produits suivants :

- l'acryloyloxyalkyloxy-4 hydroxy-4' biphényle ou composé $A_n$ dont la synthèse a été décrite à l'exemple 1,
- le dichlorure de téréphtaloyle qui est commercial,
- le chloro-2 propanol.

La synthèse du chloro-2 propanol s'effectue en deux étapes à partir de la S-alanine selon le schéma réactionnel représenté à la figure 4. L'acide chloro-2 propanoïque est obtenu par diazotation de la S-alanine en présence d'un excès de nitrite de sodium dans l'acide chlorhydrique 6N (voir B. KOPPENHOEFFER, R. WEBER, V. SCHURING, Synthesis, p. 316, 1982). Le rendement de cette synthèse est de 68 % . La température d'ébullition sous 10 mm de mercure $E_{10}$ vaut 76 - 77 ° C. Le pouvoir rotatoire du produit obtenu est $[\alpha]_D^{25}$ = - 17,65 ° .

La réduction de l'acide obtenu précédemment en chloro-2 propanol -1 est réalisée dans l'éther anhydre en présence d'hydrogénoaluminate de lithium. Le rendement de la réaction est de 40 % et le pouvoir rotatoire du produit obtenu est $[\alpha]_D^{25}$ = 19,59 ° .

. Synthèse de l'acide (chloro-2) propyloxycarbonyl - benzoïque.

La synthèse de cet acide s'effectue par réaction du dichlorure de téraphtalate avec le chloro-2 propanol dans le dioxane séché sur le tamis moléculaire 4 Å, en présence de résine Amberlyst (Aldrich A-21), pour piéger l'acide chlorhydrique formé au cours de la réaction.

Le rendement de cette synthèse est de 31 % . Le point de fusion du produit obtenu est de 168 °C. Son pouvoir rotatoire est $[\alpha]_D^{25}$ = 21 °.

. Synthèse des monomères $M5_n$

Les monomères sont obtenus par estérification des dérivés dont la synthèse a été décrite précédemment. La réaction s'effectue dans l'acétone en utilisant le dicyclohexyl 1-3 carbodiimide et la diméthylamino-4 pyridine (n pouvant prendre les valeurs allant de 2 à 14).

Ces monomères sont purifiés par recristallisation dans l'acétone puis dans l'éthanol. Les rendements et les pouvoirs rotatoires de quelques monomères (n = 6, 8 et 10) sont rassemblés dans le tableau 4 placé en fin de description.

La polymérisation peut être obtenue comme pour l'exemple 1.

PROPRIETES DES MONOMERES ET DES POLYMERES SYNTHETISES.

Les monomères et les homopolymères selon l'invention ont été étudiés par analyse enthalpique différentielle, microscopie optique et diffraction des rayons X. L'ensemble de ces observations a permis de déterminer la structure des mésophases présentées par ces composés. Les résultats sont présentés dans les tableaux 5 et 6 placés en fin de description.

Les thermogrammes des monomères $M1_n$ sont représentés à la figure 5.

Pour ces monomères, on n'observe qu'un seul pic endothermique correspondant à la fusion. Une variation de la température de fusion est observée entre la première montée en température et les suivantes. Ces données sont résumées dans le tableau 3. D'après celui-ci on peut faire les remarques suivantes :

- un allongement de la séquence flexible $-(CH_2)_n$ entraîne une augmentation de la température de fusion
- la température de fusion varie entre le premier et le deuxième passage, ce qui peut traduire l'existence de deux formes cristallines différentes (Figure 5),
- ces composés ne sont pas mésomorphes. L'observation au microscope polarisant confirme cette dernière remarque. Ces produits passent directement de l'état cristallin à l'état isotrope.

Les thermogrammes des monomères $M2_8$, $M3_8$ et $M4_8$ sont représentés à la figure 6. On remarque de nouveau que :

- un changement de structure cristalline se produit après la première montée en température. Il se traduit par une diminution du point de fusion (figure 6)
- les monomères ne sont pas mésomorphes et seul un pic endothermique correspondant à la fusion est observé. Ce résultat est confirmé par l'étude au microscope polarisant.

Les thermogrammes des monomères $M5_n$ sont représentés à la figure 7. Ces monomères sont mésomorphes. le tableau 5, placé en fin de description, regroupe les températures de transition (données en °C) entre les phases cristallines (K), smectiques C chirales ($S_C$*), smectique A, cholestériques (N*) et isotropes (L). Les températures mentionnées dans ce tableau sont celles obtenues par analyse enthalpique différentielle lors d'une deuxième montée en température. Les monomères $M5_8$ et $M5_{10}$ présentent au refroidissement un changement de texture qui suggère l'existence d'une phase smectique basse température ordonnée.

Le figures 8, 9 et 10 représentent des thermogrammes de polymères selon l'invention. La figure 8 se rapporte aux polymères $P1_6$, $P1_8$ et $P1_{10}$. La figure 9 se rapporte aux polymères $P2_8$, $P3_8$ et $P4_8$. La figure 10 se rapporte aux polymères $P5_6$, $P5_8$ et $P5_{10}$.

Le tableau 6, placé en fin de description, regroupe les températures de transition (données en °C) entre les phases vitreuses, smectiques , smectiques F chirales, smectiques A et isotropes.

TABLEAU 1

| n | R (%) | $T_f$(°C) |
|---|---|---|
| 6 | 54 | 125 |
| 8 | 43 | 125 |
| 10 | 17 | 125,5 |

TABLEAU 2

| n | R (%) | $T_f$(°C) |
|---|---|---|
| 6 | 79 | 82,5 |
| 8 | 43 | 98 |
| 10 | 38 | 100,5 |

TABLEAU 3

| n | Composés | R (%) | $T_f$(°C) premier passage | $T_f$ (°C) Deuxième passage | $[\alpha]_D^{25}$ |
|---|---|---|---|---|---|
| 6 | $M1_6$ | 70 | 95 | 85 | -6,83 |
| 8 | $M1_8$ | 68 | 103 | 96 | -2,4 |
| 10 | $M1_{10}$ | 61 | 108 | 103 | -2,64 |

TABLEAU 4

| n | Composés | R (%) | $[\alpha]_D^{25}$ |
|---|---|---|---|
| 6 | $M5_6$ | 64 | + 9,24 |
| 8 | $M5_8$ | 53 | + 7,4 |
| 10 | $M5_{10}$ | 48 | + 8,17 |

| Composés | K | | Sc* | | $S_A$ | | N* | | L |
|---|---|---|---|---|---|---|---|---|---|
| $M5_6$ | . | 76 | . | 81 | . | 162 | . | 165 | . |
| $M5_8$ | . | 78 | . | 88 | . | 162 | . | 166 | . |
| $M5_{10}$ | . | 79 | . | 90 | . | | 154 | | . |

TABLEAU 5

TABLEAU 6

| Composés | Propriétés thermiques | | | | | | |
|---|---|---|---|---|---|---|---|
| $P1_6$ | G | 85 | $S_B$ | 147 | $S_A$ | 178 | L |
| $P1_8$ | G | 75 | $S_B$ | 148 | $S_A$ | 187 | L |
| $P1_{10}$ | G | 75 | $S_B$ | 144 | $S_A$ | 177 | L |
| $P2_8$ | | | $S_F$* | 86 | $S_A$ | 132 | L |
| $P3_8$ | | | $S_F$* | 97 | $S_A$ | 131 | L |
| $P4_8$ | | | $S_F$* | 89 | $S_A$ | 116 | L |

## Revendications

1. Polymère cristal liquide ferroélectrique à chaînes latérales le polymère comprenant un squelette du type polyacrylate polyméthacrylate ou polychloroacrylate sur lequel sont branchées les chaînes latérales, caractérisé en ce qu'il répond à la formule générale suivante :

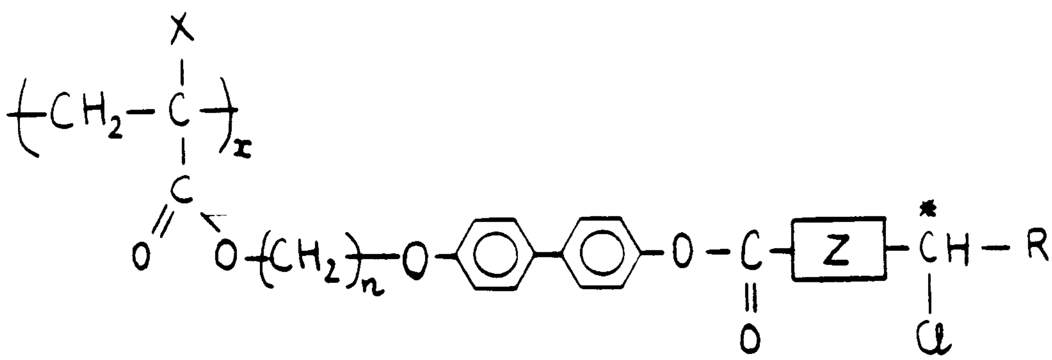

X étant H, $CH_3$ ou Cl
$2 \leq n \leq 14$
[Z] étant rien :
et R étant,

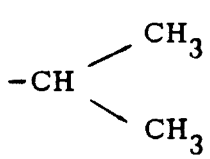
, ou
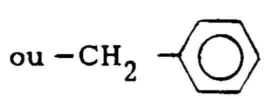

ou [Z] étant :

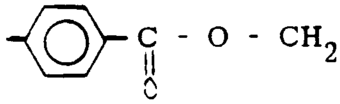

et R étant

$-CH_3$, 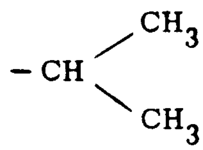 ,

$-(CH_2)_3-CH_3$
ou

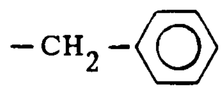

2. Matériau ferroélectrique pour application dans le domaine de la visualisation, caractérisé en ce qu'il comprend au moins un polymère selon la revendication 1.

3. Matériau ferroélectrique selon la revendication 2, caractérisé en ce qu'il comprend en outre de petites molécules présentant une phase $S_F$ ou $S_F^*$.

**Claims**

1. Ferroelectric liquid crystal polymer containing side chains, the polymer including a backbone of the polyacrylate, polymethacrylate or polychloroacrylate type on which the side chains form branches, characterized in that it corresponds to the following general formula:

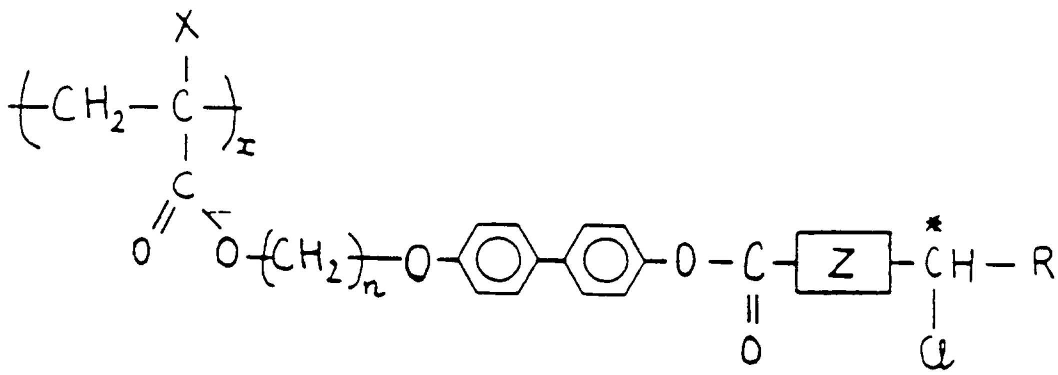

X being H, $CH_3$ or Cl
$2 \leqq n \leqq 14$
Z being nothing:
and R being

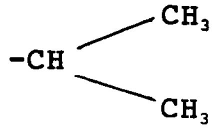 , or 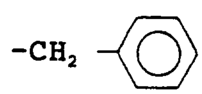

or Z being:

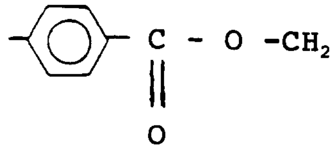

and R being $-CH_3$,

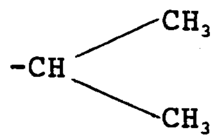

,

$-(CH_2)_3-CH_3$
or

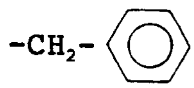

2. Ferroelectric material for application in the displays field, characterized in that it includes at least one polymer according to Claim 1.

3. Ferroelectric material according to Claim 2, characterized in that it additionally includes small molecules exhibiting an $S_F$ or $S_F^*$ phase.

**Patentansprüche**

1. Ferroelektrisches Flüssigkristallpolymer mit Seitenketten, wobei das Polymer ein Gerüst vom Typ Polyacrylat, Polymethacrylat oder Polychloracrylat aufweist, von dem die Seitenketten abzweigen, dadurch gekennzeichnet, daß es der folgenden allgemeinen Formel entspricht:

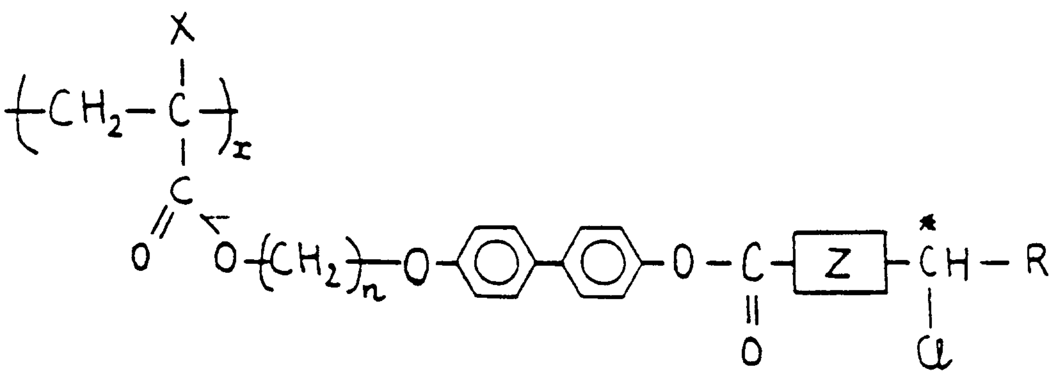

worin
X die Bedeutung H, $CH_3$ oder Cl besitzt,
$2 \leqq n \leqq 14$ ist,
[Z] nichts
und R

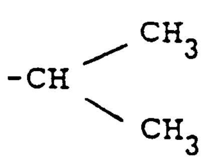

oder

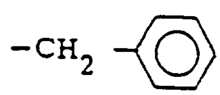

ist

oder Z die Bedeutung

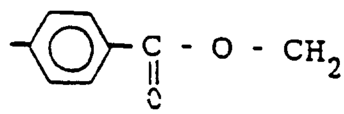

besitzt
und R

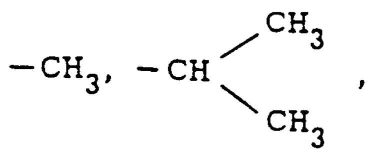

$-(CH_2)_3-CH_3$
oder

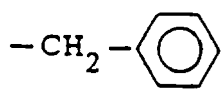

ist.

2. Ferroelektrisches Material zur Verwendung auf dem Gebiet der Sichtbarmachung, dadurch gekennzeichnet, daß es mindestens ein Polymer gemäß Anspruch 1 umfaßt.

3. Ferroelektrisches Material nach Anspruch 2, dadurch gekennzeichnet, daß es zusätzlich kleine Moleküle mit einer $S_F$- oder $S_F^*$-Phase umfaßt.

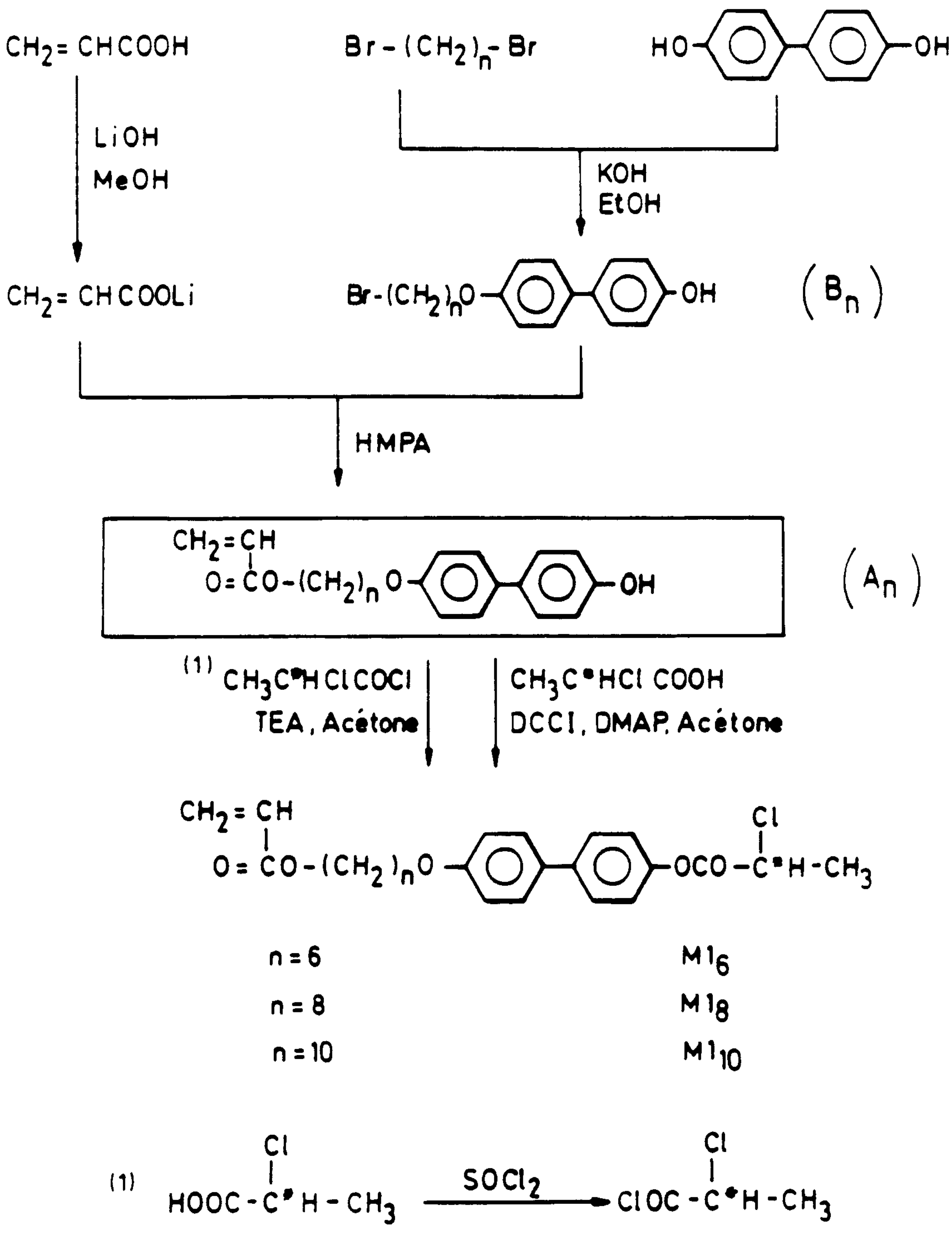


($B_n$)

($A_n$)

n = 6 M1₆

n = 8 M1₈

n = 10 M1₁₀

FIG.1

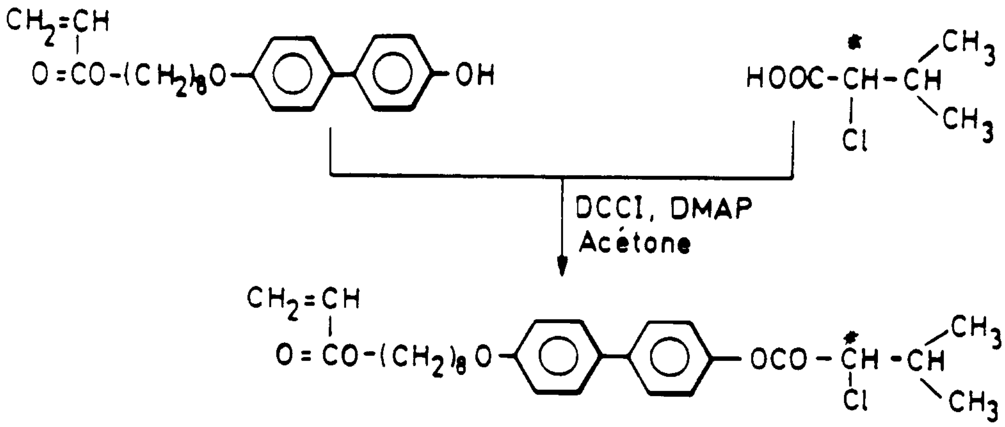


FIG. 2

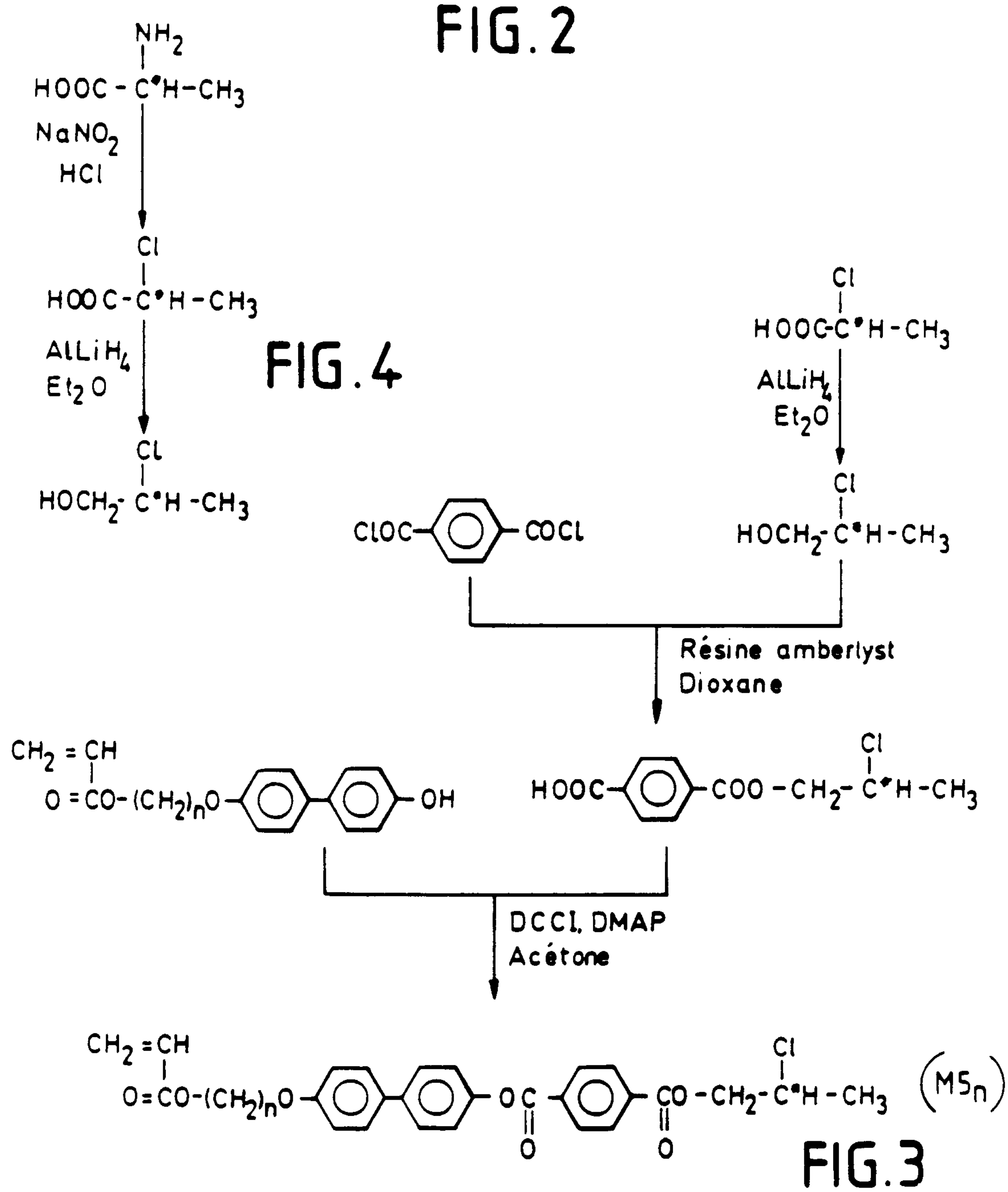


FIG. 4

(M5n)

FIG. 3

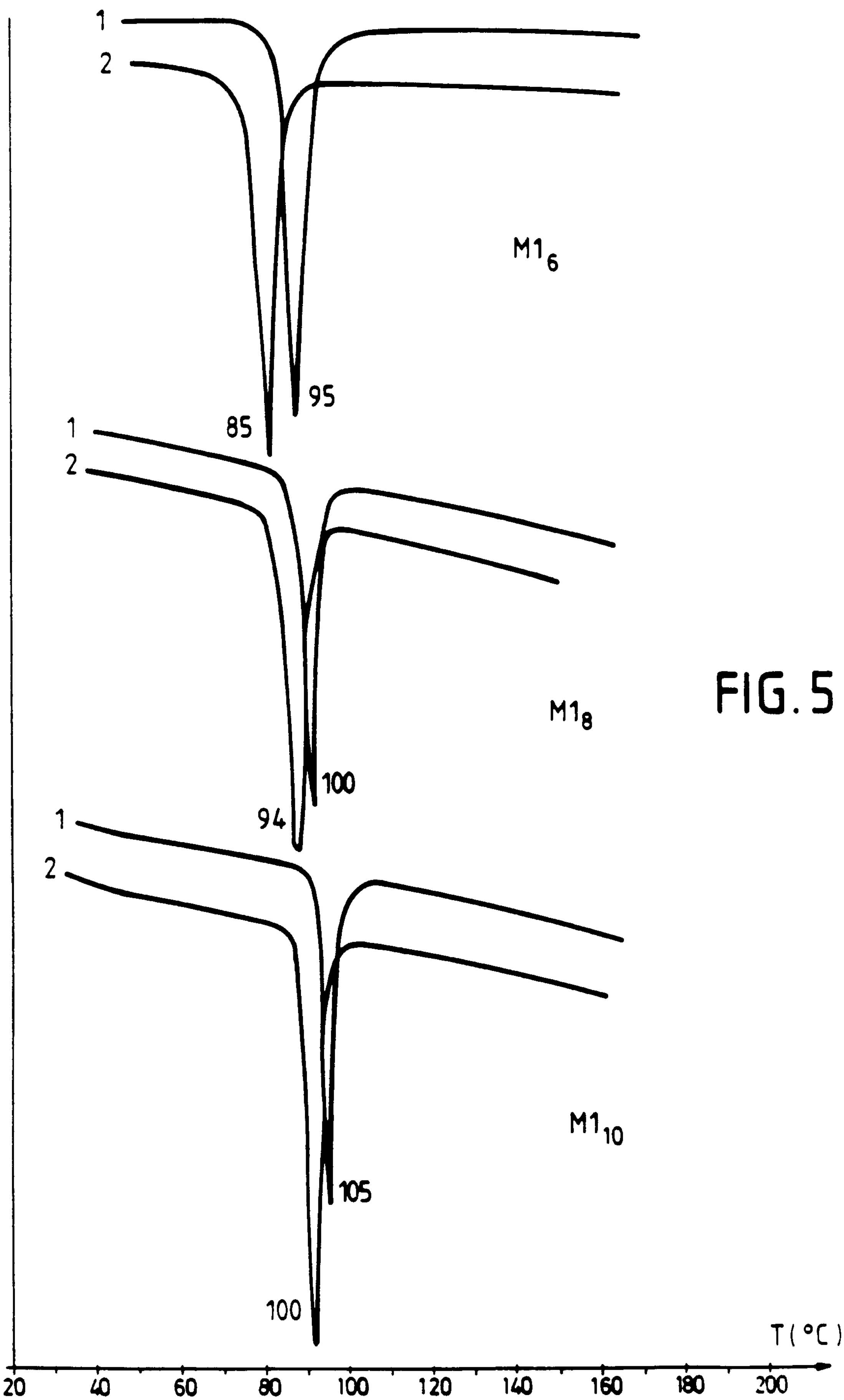
1
2
M1$_6$
95
85
1
2
M1$_8$
100
94
1
2
M1$_{10}$
105
100
T (°C)
20
40
60
80
100
120
140
160
180
200

FIG. 5

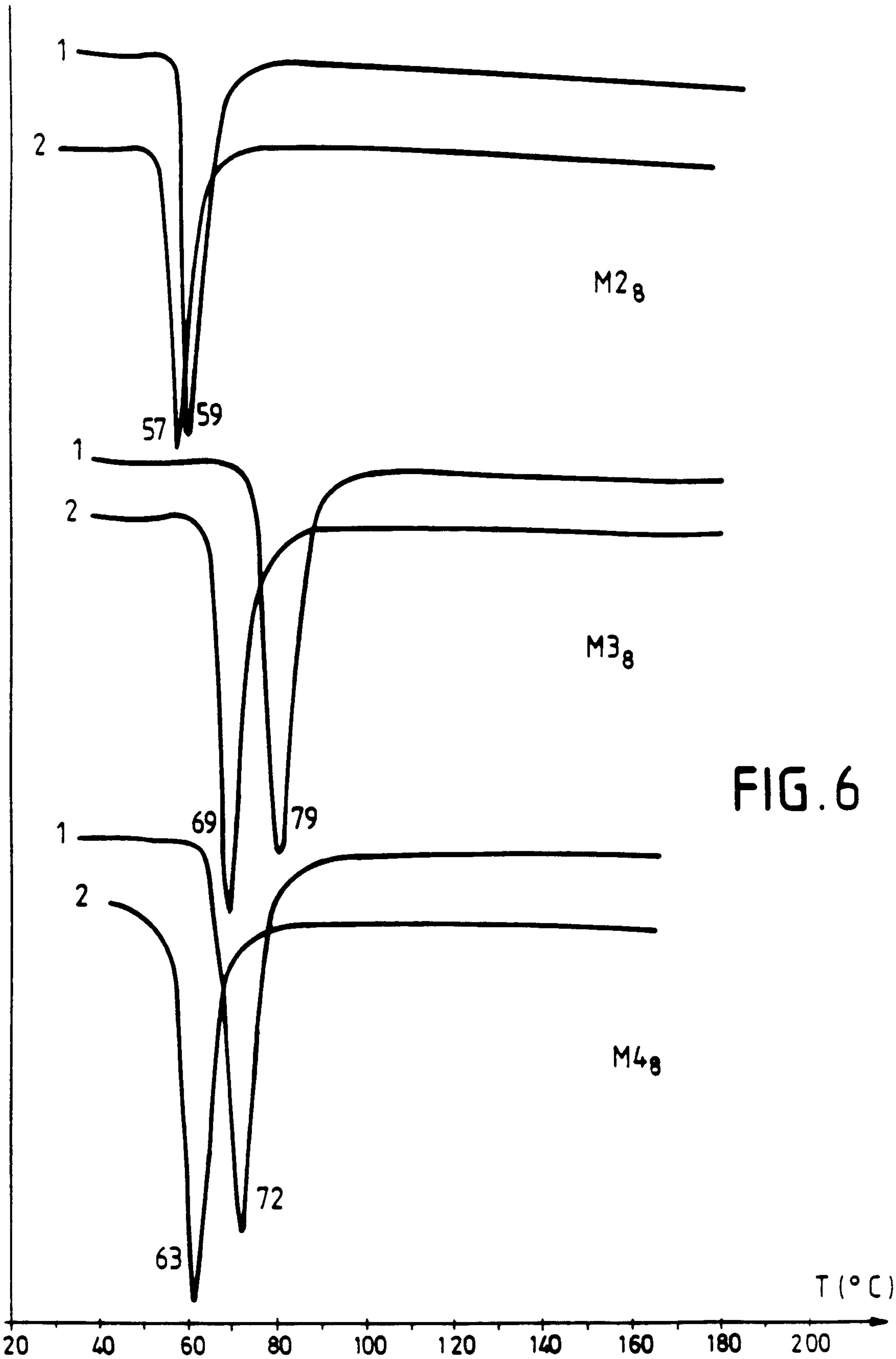
1
2
M2 8
57
59
1
2
M3 8
69
79
1
2
M4 8
72
63
T (°C)
20
40
60
80
100
120
140
160
180
200

FIG.6

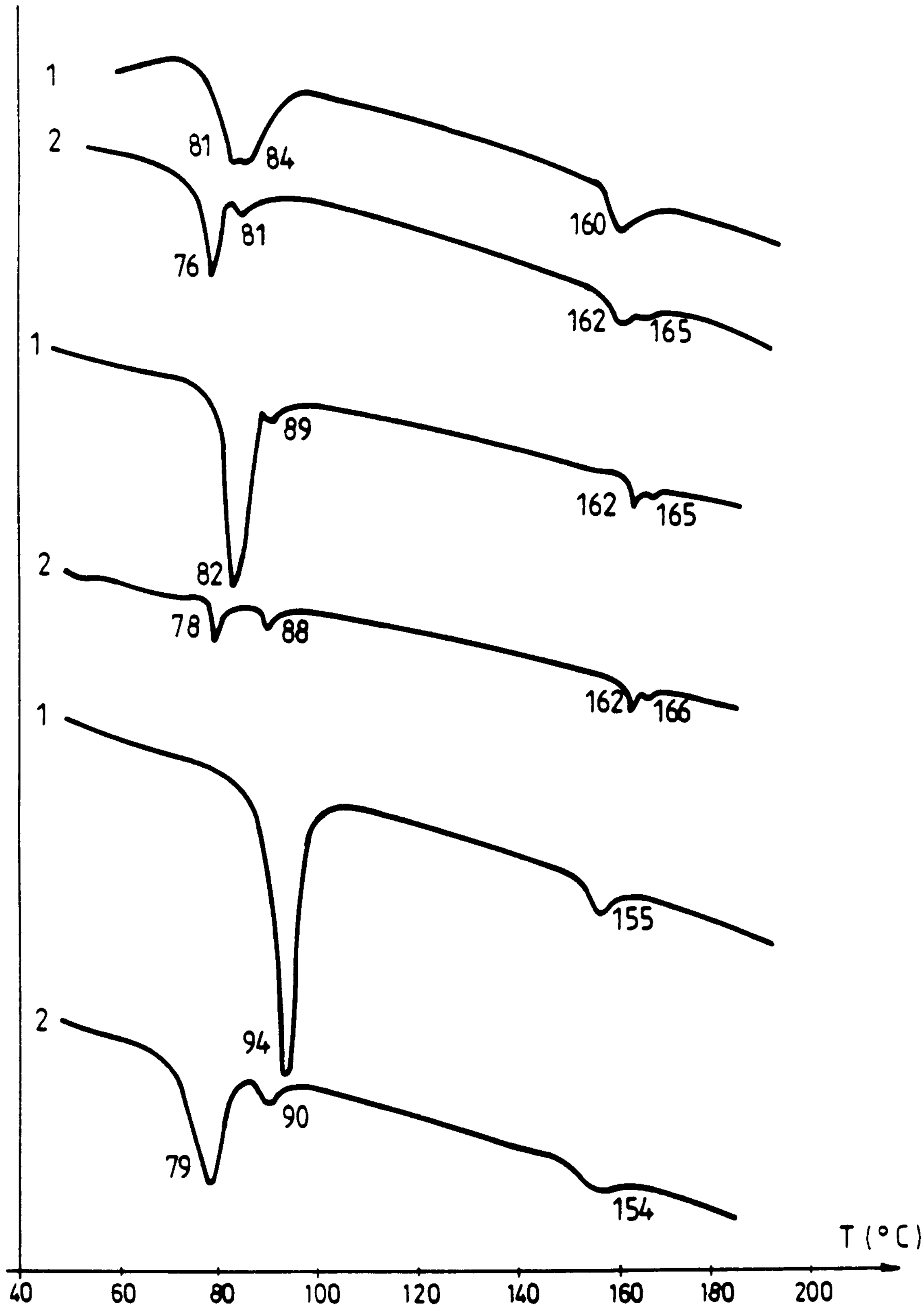
1
2
81
84
160
76
81
162
165
1
89
162
165
82
2
78
88
162
166
1
155
94
2
90
79
154
T (°C)
40
60
80
100
120
140
160
180
200

FIG. 7

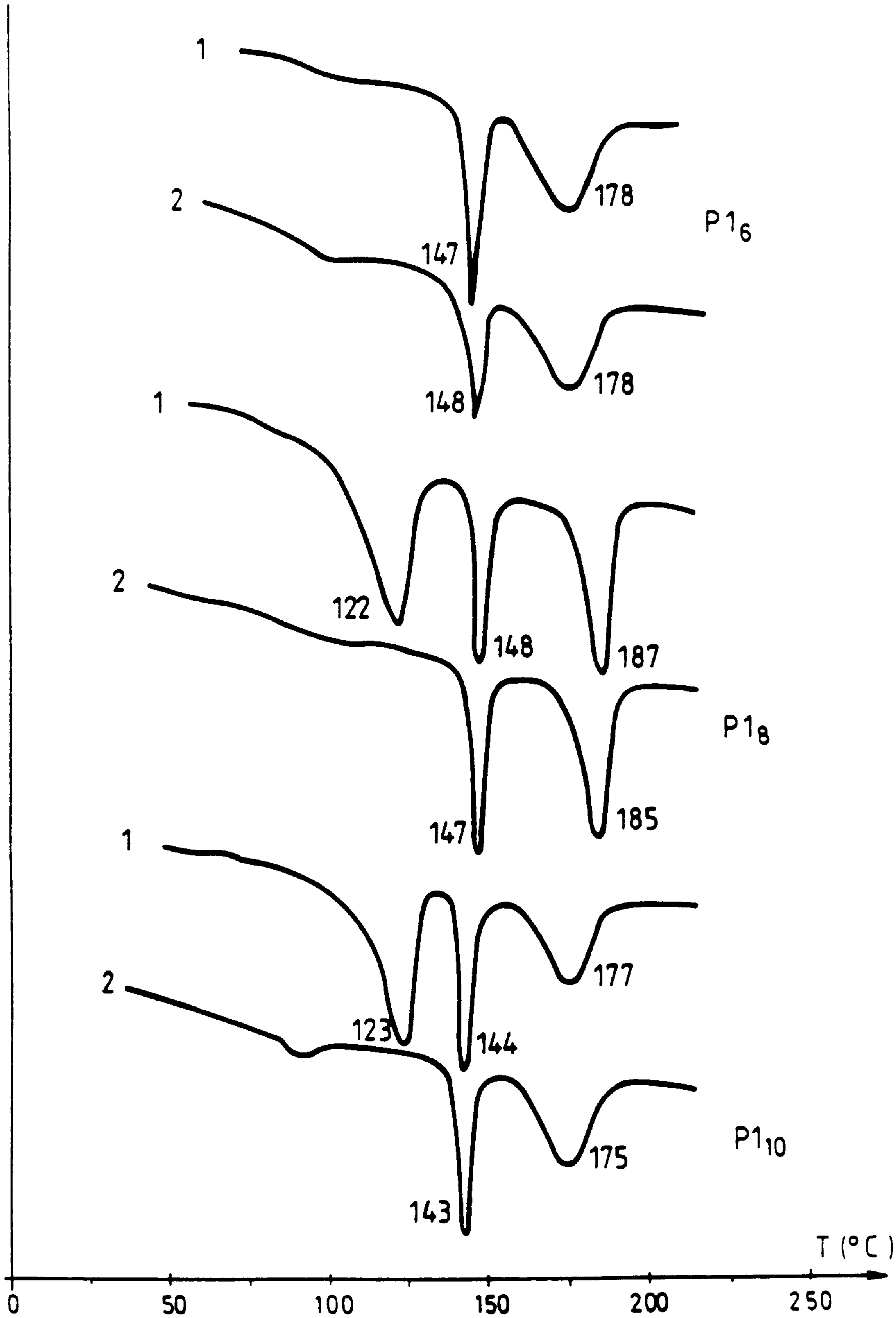

1
2
147
178
P1_6
148
178
1
2
122
148
187
P1_8
147
185
1
2
123
144
177
175
P1_10
143
T (°C)
0
50
100
150
200
250


FIG.8

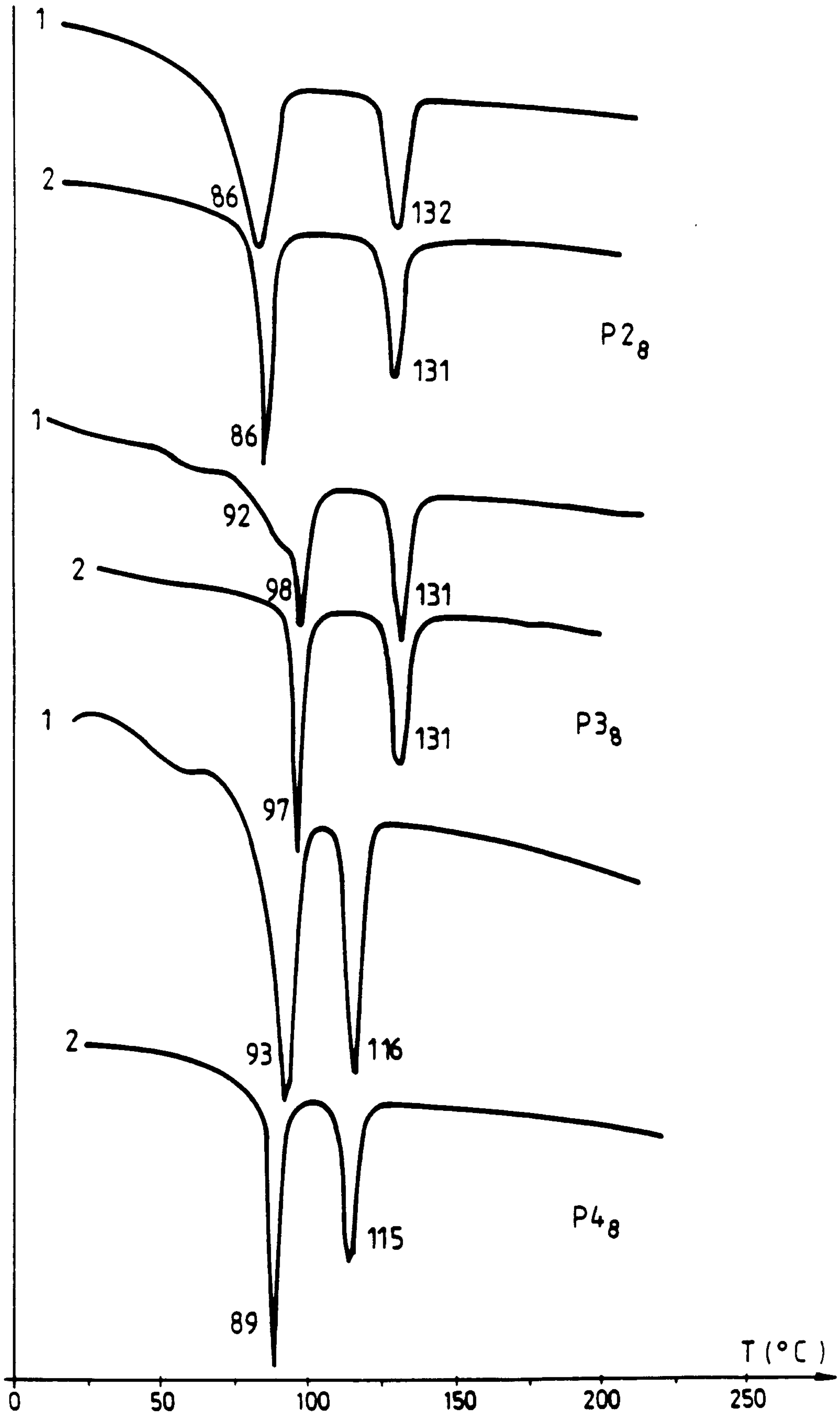
1
2
86
132
86
131
P2 8
1
92
2
98
131
97
131
P3 8
1
2
93
116
89
115
P4 8
T (°C)
0
50
100
150
200
250

FIG.9

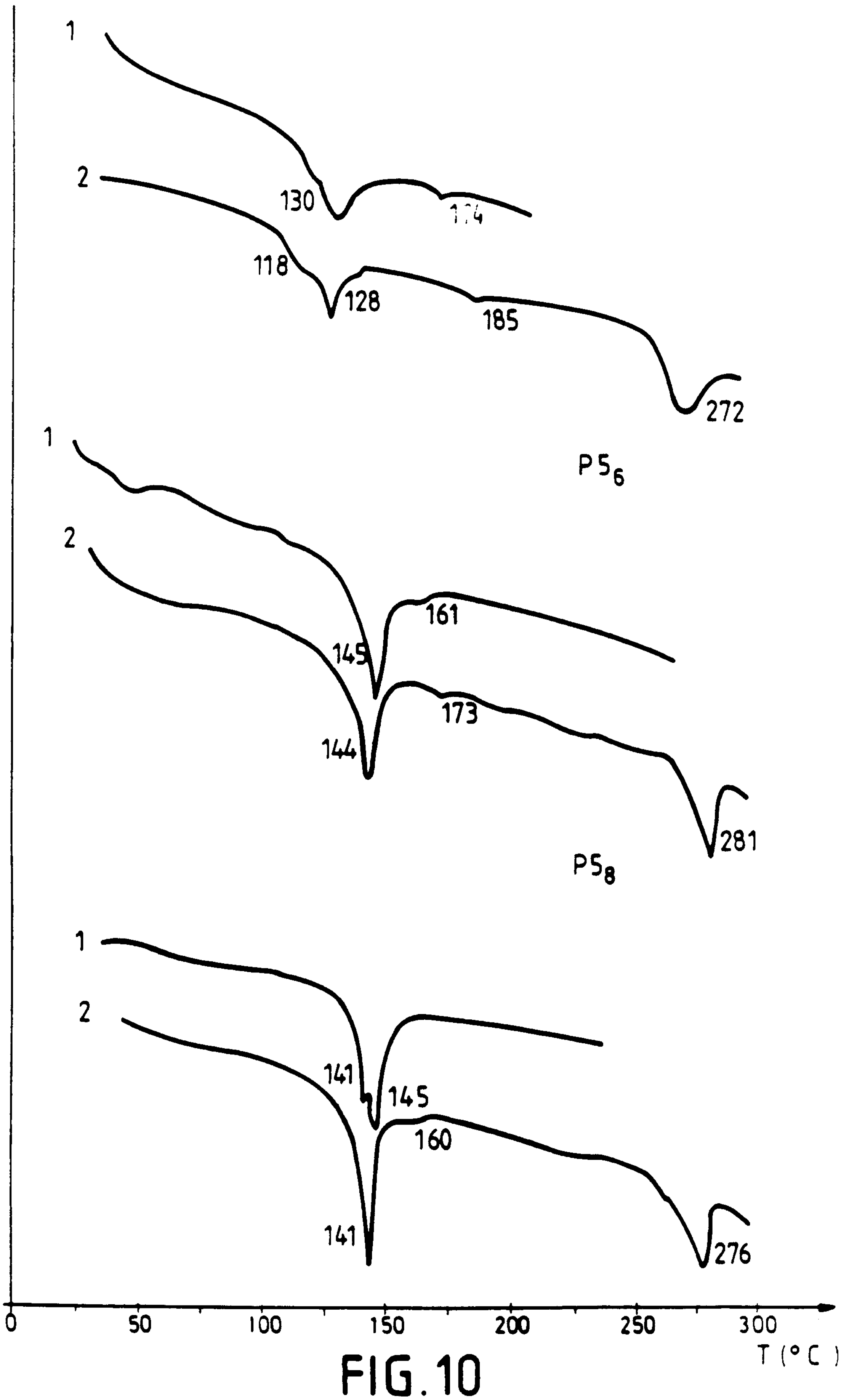
1
2
130
118
128
185
272
P5₆
1
2
161
145
144
173
281
P5₈
1
2
141
145
160
141
276
0
50
100
150
200
250
300
T (°C)

FIG.10